# EUROPEAN PATENT APPLICATION

(11) **EP 4 329 012 A1**
(43) Date of publication of application: **28.02.2024**
(21) Application number: 22873252.5
(22) Date of filing: 27.09.2022
(51) Int. Cl.: H01M 4/62, H01M 10/42, H01M 4/525, H01M 10/052, C01G 49/00, H01M 4/36, H01M 4/58, H01M 4/02

(54) **CATHODE ADDITIVE FOR LITHIUM SECONDARY BATTERY, METHOD FOR PREPARING SAME, CATHODE COMPRISING SAME, AND LITHIUM SECONDARY BATTERY**

(30) Priority: 27.09.2021 KR 20210127403; 16.05.2022 KR 20220059705
(71) Applicant: LG Chem, Ltd., Yeongdeungpo-gu Seoul 07336 (KR)
(72) Inventor: SUH, Donghoon, Daejeon 34122 (KR); YOON, Seokhyun, Daejeon 34122 (KR); CHOI, Jonghyun, Daejeon 34122 (KR)
(74) Representative: Hoffmann Eitle
(86) International application number: PCT/KR2022/014492
(87) International publication number: WO 2023/048550

(57) **Abstract**

The present disclosure relates to a cathode additive for a lithium secondary battery, a manufacturing method thereof, a cathode for a lithium secondary battery including the same, and a lithium secondary battery. In the present disclosure, there is provided a cathode additive for a lithium secondary battery having excellent air stability while exhibiting high initial irreversible capacity.

## Description

### [TECHNICAL FIELD]

### Cross-reference to Related Application

This application claims the benefits of Korean Patent Applications No. 10-2021-0127403 filed on September 27, 2021, No. 10-2022-0059705 filed on May 16, 2022, and No. 10-2022-0122332 filed on September 27, 2022 with the Korean Intellectual Property Office, the disclosure of which is incorporated herein by reference in its entirety.

The present disclosure relates to a cathode additive for a lithium secondary battery, a manufacturing method thereof, a cathode for a lithium secondary battery including the same, and a lithium secondary battery.

### [BACKGROUND OF ART]

As power consumption increases with the multifunctionalization of electronic devices, many attempts have been made to increase the capacity of a lithium secondary battery and improve charge/discharge efficiency thereof.

As one example, there has been a proposal for a technique, in which a cathode active material of at least 80% Ni is applied to a cathode of a lithium secondary battery as a cathode material, and a metal or metal-based anode active material such as SiO, Si or SiC is applied to an anode along with a carbon-based anode active material such as natural graphite, artificial graphite or the like.

The metal and metal oxide-based anode active material enables a higher capacity than the carbon-based anode active material. However, in the case of the metal and metal oxide-based anode active material, a volume change during charging and discharging is much larger than that of graphite, and thus it is difficult to increase the content of metals and metal oxides in the anode to 15% or more. In addition, when the metals and metal oxides are added into the anode, an irreversible reaction occurs in the initial charge and discharge, and thus the loss of lithium is larger than when a carbon-based anode active material is applied. Thus, when the metal and metal oxide-based anode active material is applied, the amount of lithium lost increases as the capacity of the battery increases, and thus a degree of decrease in the initial capacity also increases.

Accordingly, a study has been conducted on various methods for increasing the capacity of the lithium secondary battery or reducing the irreversible capacity. One of the methods is prelithiation, which is a concept of replenishing lithium consumed in the formation of a solid electrolyte interphase (SEI) layer in an initial state in the battery.

Various methods have been proposed for prelithiation in the battery.

As one example, there is a method of electrochemically lithiating the anode before driving the battery. However, the lithiated anode is very unstable in the atmosphere, and the electrochemical lithiation method is difficult to scale-up the process.

As another example, there is a method of coating the anode with lithium metal or lithium silicide (LiₓSi) powder. However, the powder has low atmospheric stability due to high reactivity, and thus causing a problem in establishing a suitable solvent and process conditions when coating the anode.

As a prelithiation method in the cathode, there is a method of coating with the cathode material as much as the amount of lithium consumed in the anode. However, due to the low capacity of the cathode material per se, the amount of the added cathode material increases, and the energy density and capacity per weight of the final battery decrease as much as the amount of the increased cathode material.

Accordingly, a material suitable for prelithiation of the battery in the cathode needs to have an irreversible property in which lithium is desorbed at least twice as much as that of a conventional cathode material during initial charge of the battery and the material does not react with lithium during subsequent discharge. An additive satisfying the above conditions is referred to as sacrificial positive electrode materials.

A commercial battery is subjected to a formation process in which an electrolyte is injected into a case including a stacked cathode, a separator, and an anode, and then a charge/discharge operation is performed for the first time. In this process, an SEI layer formation reaction occurs on the anode, and gas is generated due to the decomposition of the electrolyte. In the formation process, the sacrificial positive electrode material reacts with the electrolyte while releasing lithium and decomposing, and gases such as N₂, O₂, CO₂, etc., generated in the process are recovered through a gas pocket removal process.

As the sacrificial positive electrode material, over-lithiated positive electrode materials, which are lithium-rich metal oxides, are widely used. As the over-lithiated positive electrode materials, Li₅CoO₄, Li₅FeO₄, Li₆MnO₄ and the like, which have an anti-fluorite structure, are well known. In terms of a theoretical capacity, Li₆CoO₄ has 977 mAh/g, Li₅FeO₄ has 867 mAh/g, and Li₆MnO₄ has 1001 mAh/g, which are sufficient for use as a sacrificial positive electrode material. Among the above, Li₆CoO₄ has the most excellent electrical conductivity and thus has good electrochemical properties for use as a sacrificial positive electrode material.

However, the LisFeO₄ sacrificial positive electrode material rapidly deteriorates in performance when exposed to air due to poor air stability, and has insufficient irreversible capacity due to low electrical conductivity. As a result, in order to compensate for large irreversible capacity of a high-capacity lithium secondary battery, there is a problem in that a considerable amount of LisFeO₄ should be added. This has become an impediment to recent technological development for providing a lithium secondary battery with a lower weight and improved capacity. Accordingly, there is a continuous demand for the development of a Li₅FeO₄-based sacrificial positive electrode material having a larger irreversible capacity.

### [DETAILED DESCRIPTION OF THE INVENTION]

### [Technical Problem]

In the present disclosure, there is provided a cathode additive for a lithium secondary battery having excellent air stability while exhibiting high initial irreversible capacity.

In the present disclosure, there is provided a manufacturing method of the cathode additive for a lithium secondary battery.

In the present disclosure, there is provided a cathode including the cathode additive for a lithium secondary battery.

In the present disclosure, there is provided a lithium secondary battery including the cathode for a lithium secondary battery.

### [Technical Solution]

According to an embodiment of the present disclosure, there is provided a cathode additive for a lithium secondary battery including
lithium (Li)-iron (Fe) oxide particles doped or undoped with a hetero-element; and
a lithium borate-based compound-containing layer formed on the lithium-iron oxide particles.

According to another embodiment of the present disclosure, there is provided a manufacturing method of the cathode additive for a lithium secondary battery, including the steps of:
preparing a precursor mixture containing a lithium (Li) precursor and an iron (Fe) precursor;
calcining the precursor mixture under an inert gas atmosphere to obtain lithium-iron oxide particles doped or undoped with a hetero-element; and
heat-treating a mixture containing the lithium-iron oxide particles and a lithium borate-based compound under an inert gas or oxygen-containing gas atmosphere to obtain lithium-iron oxide particles coated with a lithium borate-based compound-containing layer.

According to another embodiment of the present disclosure, there is provided a cathode for a lithium secondary battery including a cathode active material, a binder, a conductive material, and the cathode additive for a lithium secondary battery.

According to another embodiment of the present disclosure, there is provided a lithium secondary battery including the cathode for a lithium secondary battery; an anode; a separator; and an electrolyte.

Hereinafter, the cathode additive for a lithium secondary battery, the manufacturing method of the cathode additive, the cathode for a lithium secondary battery, and the lithium secondary battery according to the embodiment of the present invention will be described in more detail.

The terms or words used in the present disclosure and claims should not be construed as being limited to their ordinary or dictionary meanings and should be interpreted as a meaning and concept consistent with the technical idea of the invention based on the principle that the inventors may properly define the concept of the terms in order to best describe their own inventions.

Unless otherwise defined in the present disclosure, all technical and scientific terms have the same meaning as commonly understood by those skilled in the art to which the present invention pertains. The terms used in the description of the present invention is intended for the purpose of effectively describing particular embodiments only and is not intended to limit the present invention.

Singular expressions of the present disclosure may include plural expressions unless they are differently expressed contextually.

The terms "include", "comprise", and the like of the present disclosure are used to specify certain features, regions, integers, steps, operations, elements, and/or components, and these do not exclude the existence or the addition of other certain features, regions, integers, steps, operations, elements, components and/or groups.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

In the present disclosure, when a positional relationship of two parts is described as, for example, "on -", "at an upper part of ~", "at a lower part of ~", "next to -", etc., one or more other parts may be placed between the two parts unless an expression of "immediately" or "directly' is used.

In the present disclosure, when a temporal relationship is described as, for example, "after ~", "following -", "subsequent to -", "before ~", etc., cases in which events are not continuous may be included, unless an expression of "immediately" or "directly' is used.

In the present disclosure, it should be understood that the term "at least one" includes all possible combinations from one or more related items.

As used herein, the term "cathode additive" may refer to a material having an irreversible property in which lithium is desorbed at least twice as much as that of a conventional cathode material during initial charge of the battery and the material does not react with lithium during subsequent discharge. The cathode additive may be referred to as sacrificial positive electrode materials. Since the cathode additive compensates for the loss of lithium, as a result, the capacity of the battery may be increased by restoring the lost capacity of the battery, and the gas generation may be suppressed to prevent the battery from exploding, thereby improving lifespan and safety of the battery.

According to an embodiment of the present disclosure, there is provided a cathode additive for a lithium secondary battery including lithium (Li)-iron (Fe) oxide particles doped or undoped with a hetero-element; and a lithium borate-based compound-containing layer formed on the lithium-iron oxide particles.

As a result of continuous research by the present inventors, it has been confirmed that a cathode additive (sacrificial positive electrode material) in which a layer containing a lithium borate-based compound is formed on lithium-iron oxide particles can exhibit excellent electrical conductivity and high irreversible capacity, while having excellent stability against moisture and carbon dioxide even when exposed to air.

The cathode additive includes lithium (Li)-iron (Fe) oxide particles.

The lithium (Li)-iron (Fe) oxide particles may be doped or undoped with a hetero-element.

For example, the lithium (Li)-iron (Fe) oxide particles may be lithium transition metal oxide particles including a Li₅FeO₄-based compound doped or undoped with a hetero-element.

The Li₅FeO₄-based compound contains lithium at a higher ratio than its stoichiometric ratio. Excessive lithium ions may migrate to the anode during initial charge and discharge to compensate for the loss of irreversible capacity.

The lithium transition metal oxide particles may be formed of only LisFeO₄ doped or undoped with a hetero-element, or may further include a conventionally known sacrificial positive electrode material or additive such as Li₂NiO₂ and LioCoO₄. However, in consideration of manufacturing cost and physical properties of the cathode additive, the lithium transition metal oxide particles preferably contain 50 mol% or more, 70 mol% or more, or 90 mol% or more of Li₅FeO₄.

For example, the lithium (Li)-iron (Fe) oxide may be Li₅FeO₄ or a compound represented by the following Chemical Formula 1:

[Chemical Formula 1] Li₅Fe_{1-x-y}AlₓM_{y}O₄

in Chemical Formula 1,
M is at least one element selected from the group consisting of at least one group 2 element selected from the group consisting of magnesium (Mg), calcium (Ca), strontium (Sr), and barium (Ba); at least one group 17 element selected from the group consisting of fluorine (F), chlorine (Cl), bromine (Br), and iodine (I); at least one period 4 transition metal selected from the group consisting of scandium (Sc), titanium (Ti), vanadium (V), chromium (Cr), manganese (Mn), cobalt (Co), copper (Cu), and zinc (Zn); and at least one group 13 element selected from the group consisting of gallium (Ga) and indium (In),
x is 0.1 to 0.35, and y is 0 to 0.1.

Preferably, in Chemical Formula 1, M may be at least one element selected from the group consisting of magnesium (Mg), fluorine (F), titanium (Ti), zinc (Zn), and gallium (Ga).

In Chemical Formula 1, x may be 0.10 or more, or 0.15 or more; and 0.35 or less, 0.30 or less, or 0.25 or less. Preferably, x may be 0.10 to 0.35, 0.15 to 0.35, 0.15 to 0.30, or 0.15 to 0.25.

In Chemical Formula 1, y may be 0 or more, 0.01 or more, 0.02 or more, or 0.03 or more; and 0.10 or less, 0.07 or less, or 0.05 or less. Preferably, y may be 0 to 0.1, 0 to 0.07, or 0 to 0.05.

Preferably, the lithium (Li)-iron (Fe) oxide may be at least one compound selected from the group consisting of Li₅FeO₄, Li₅Fe_{0.85}Al_{0.15}O₄, Li₅Fe_{0.82}Al_{0.18}O₄, Li₅Fe_{0.81}Al_{0.19}O₄, Li₅Fe_{0.8}Al_{0.2}O₄, Li₅Fe_{0.77}Al_{0.23}O₄, Li₅Fe_{0.76}Al_{0.24}O₄, Li₅Fe_{0.75}Al_{0.25}O₄, Li₅Fe_{0.72}Al_{0.28}O₄, Li₅Fe_{0.71}Al_{0.29}O₄, Li₅Fe_{0.7}Al_{0.3}O₄, Li₅Fe_{0.82}Al_{0.15}Mg_{0.03}O₄, Li₅Fe_{0.77}Al_{0.2}Mg_{0.03}O₄, Li₅Fe_{0.72}Al_{0.25}Mg_{0.03}O₄, Li₅Fe_{0.81}Al_{0.15}Mg_{0.04}O₄, Li₅Fe_{0.76}Al_{0.2}Mg_{0.04}O₄, Li₅Fe_{0.71}Al_{0.25}Mg_{0.04}O₄, Li₅Fe_{0.82}Al_{0.15}F_{0.03}O₄, Li₅Fe_{0.77}Al_{0.2}F_{0.03}O₄, Li₅Fe_{0.72}Al_{0.25}F_{0.03}O₄, Li₅Fe_{0.81}Al_{0.15}F_{0.04}O₄, Li₅Fe_{0.76}Al_{0.2}F_{0.04}O₄, Li₅Fe_{0.71}Al_{0.25}F_{0.04}O₄, Li₅Fe_{0.82}Al_{0.15}Ti_{0.03}O₄, Li₅Fe_{0.77}Al_{0.2}Ti_{0.03}O₄, Li₅Fe_{0.72}Al_{0.25}Ti_{0.03}O₄, Li₅Fe_{0.81}Al_{0.15}Ti_{0.04}O₄, Li₅Fe_{0.76}Al_{0.2}Ti_{0.04}O₄, Li₅Fe_{0.71}Al_{0.25}Ti_{0.04}O₄, Li₅Fe_{0.82}Al_{0.15}Zn_{0.03}O₄, Li₅Fe_{0.77}Al_{0.2}Zn_{0.03}O₄, Li₅Fe_{0.72}Al_{0.25}Zn_{0.03}O₄, L₁₅Fe_{0.81}Al_{0.15}Zn_{0.04}O₄, Li₅Fe_{0.76}Al_{0.2}Zn_{0.04}O₄, Li₅Fe_{0.71}Al_{0.25}Zn_{0.04}O₄, Li₅Fe_{0.82}Al_{0.15}Ga_{0.03}O₄, Li₅Fe_{0.77}Al_{0.2}Ga_{0.03}O₄, Li₅Fe_{0.72}Al_{0.25}Ga_{0.03}O₄, L₁₅Fe_{0.81}Al_{0.15}Ga_{0.04}O₄, Li₅Fe_{0.76}Al_{0.2}Ga_{0.04}O₄, and Li₅Fe_{0.71}Al_{0.25}Ga_{0.04}O₄
In the lithium (Li)-iron (Fe) oxide, the hetero-element may form a stable single phase with iron (Fe). Due to the formation of such a single phase, a part of the lithium (Li)-iron (Fe) oxide is inactivated to improve its structural stability and suppress the generation of oxygen gas by the decomposition of the lithium (Li)-iron (Fe) oxide.

The formation of a single phase in which the hetero-elements are alloyed can be confirmed by, for example, analyzing the lithium (Li)-iron (Fe) oxide by XRD. Specifically, when the lithium (Li)-iron (Fe) oxide is analyzed by XRD, the peak derived from iron (Fe) is shifted by doping and may appear as a single peak representing a stable single phase rather than a secondary phase. In a specific example, the formation of a single phase doped with a hetero-element can be confirmed from the fact that a peak derived from iron (Fe), for example, a single peak identified at 2θ of 23° to 24°±0.1°, is shifted by about 0.10° to 0.20° compared to the case where the hetero-element is not added.

The lithium (Li)-iron (Fe) oxide particles may be primary particles having a volume average particle diameter (D50) of 0.5 *µ*m to 45 *µ*m, 1 *µ*m to 25 *µ*m, or 5 *µ*m to 15 *µ*m, or secondary particles in which the primary particles are aggregated. Within the particle diameter range, the cathode additive may be uniformly mixed with the cathode active material to exhibit appropriate characteristics in the cathode.

In order to have an appropriate particle size distribution and a volume average particle diameter, the lithium-iron oxide particles are synthesized, and then may be passed through a standard sieve having a size corresponding to a desired particle size distribution. The particle size distribution and volume average particle diameter (D50) of the lithium-iron oxide particles may be measured and calculated using a well-known laser particle size analyzer.

According to an embodiment of the present invention, the cathode additive includes a lithium borate-based compound-containing layer formed on the lithium-iron oxide particles.

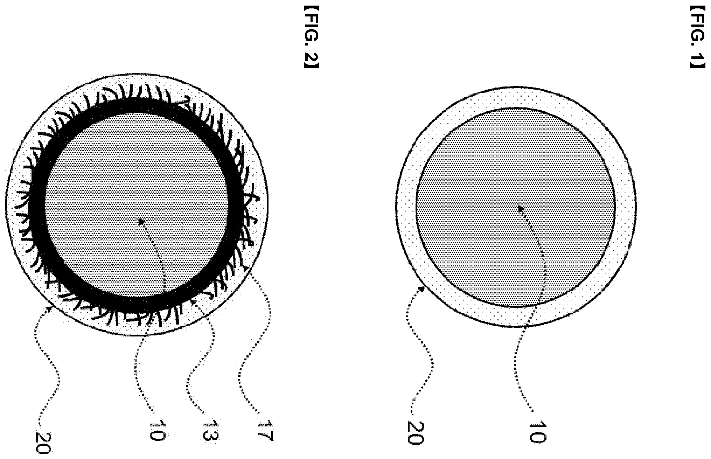

The lithium borate-based compound-containing layer is a coating layer formed on the lithium-iron oxide particles. The lithium borate-based compound-containing layer may be formed on all or a part of the surface of the lithium-iron oxide particles. A schematic cross-section of the cathode additive according to the embodiment may have a structure as shown in FIG. 1.

The lithium borate-based compound-containing layer may be a coating layer made of a lithium borate-based compound.

In addition, in the lithium borate-based compound-containing layer, an additive such as lithium hexafluorophosphate, lithium triflate, and lithium difluorophosphate known in the art may be included together with the lithium borate-based compound. In order to sufficiently achieve the effect of improving air stability by the introduction of the lithium borate-based compound-containing layer, the lithium borate-based compound-containing layer preferably contains 50 mol% or more, 70 mol% or more, or 90 mol% or more of the lithium borate-based compound.

The lithium borate-based compound-containing layer formed on the lithium-iron oxide particles may be confirmed by electron microscopy or XRD analysis of the cathode additive.

According to an embodiment of the present disclosure, the lithium borate-based compound may be at least one compound selected from the group consisting of lithium bis(oxalato)borate, lithium difluoro(oxalato)borate, lithium tetrafluoroborate, lithium bis(2-methyl-2-fluoro-malonato)borate, and lithium malonate difluoro borate.

According to an embodiment of the present disclosure, the lithium borate-based compound may be included in an amount of 2.0 parts by weight to 25.0 parts by weight, 2.0 parts by weight to 20.0 parts by weight, 2.5 parts by weight to 20.0 parts by weight, 2.5 parts by weight to 15.0 parts by weight, 2.5 parts by weight to 10.0 parts by weight, or 2.5 parts by weight to 5.0 parts by weight based on 100 parts by weight of a total weight of the cathode additive.

In order to sufficiently achieve the effect of improving air stability of the cathode additive, the lithium borate-based compound is preferably included in an amount of 2.0 parts by weight or more based on 100 parts by weight of a total amount of the cathode additive. However, when the lithium borate-based compound is excessively included, irreversible capacity of the cathode additive and capacity characteristics during charging and discharging may be deteriorated. Therefore, the amount of the lithium borate-based compound-containing layer is preferably 25.0 parts by weight or less based on 100 parts by weight of a total weight of the cathode additive.

Meanwhile, the cathode additive for a lithium secondary battery may further include a carbon coating layer formed on the lithium-iron oxide particles.

For example, the cathode additive for a lithium secondary battery may include the lithium-iron oxide particles; a carbon coating layer formed on the lithium-iron oxide particles; and a lithium borate-based compound-containing layer formed on the carbon coating layer.

In addition, the cathode additive for a lithium secondary battery may further include a carbon nanotube-containing layer formed on the carbon coating layer.

For example, the cathode additive for a lithium secondary battery may include the lithium-iron oxide particles; a carbon coating layer formed on the lithium-iron oxide particles; a carbon nanotube-containing layer formed on the carbon coating layer; and a lithium borate-based compound-containing layer formed on the carbon nanotube-containing layer. A schematic cross-section of the cathode additive according to the embodiment may have a structure as shown in FIG. 2.

The present inventors continued research to improve air stability while improving electrical conductivity and irreversible capacity of a lithium-iron oxide-based cathode additive in a more simplified manner. As a result of such continuous research, it was confirmed that a cathode additive in which a carbon coating layer derived from a water-soluble polymer dispersant was formed on lithium-iron oxide particles could be obtained by adding a dispersion in which carbon nanotubes are dispersed in the presence of a water-soluble polymer dispersant, followed by calcination in the process of manufacturing a lithium-iron oxide-based cathode additive. In addition, it was confirmed that the cathode additive in the form of a double coating layer in which the carbon coating layer and the carbon nanotube-containing layer were respectively formed could be obtained during the manufacturing process. Further, a lithium borate-based compound-containing layer is formed on the carbon coating layer or the carbon nanotube-containing layer.

The cathode additive may have excellent electrical conductivity and high irreversible capacity compared to previously known lithium-iron oxide-based cathode additives, since a carbon nanotube-containing layer having similar electrical conductivity is formed on the lithium-iron oxide particles. In addition, a uniform carbon coating layer derived from the water-soluble polymer dispersant is formed on the surface of the lithium-iron oxide particles, and a relatively high proportion of carbon nanotubes may be uniformly bonded on the carbon coating layer. Therefore, the cathode additive of one embodiment may have higher electrical conductivity and irreversible capacity.

In the cathode additive for a lithium secondary battery according to one embodiment, a high proportion of carbon nanotubes can be uniformly bonded to lithium-iron oxide particles due to the interaction of the carbon coating layer and the carbon nanotube-containing layer, so that electrical conductivity, irreversible capacity and capacity characteristics during charging and discharging can be greatly improved. In addition, the lithium borate-based compound-containing layer formed on the carbon nanotube-containing layer enables air stability to be improved, so that electrical conductivity, irreversible capacity, and capacity characteristics during charging and discharging of the cathode additive can be stably expressed.

In the cathode additive, a carbon coating layer and a carbon nanotube-containing layer including carbon nanotubes physically or chemically bonded to the carbon coating layer may be formed on the lithium transition metal oxide particles. The formation of the carbon coating layer and the carbon nanotube-containing layer may be confirmed by electron microscopy or XRD analysis of the cathode additive.

According to an embodiment of the present disclosure, the sum of the contents of the carbon coating layer and the carbon nanotube-containing layer may be 0.5 parts by weight to 6.0 parts by weight, 1.0 parts by weight to 6.0 parts by weight, 1.0 parts by weight to 5.9 parts by weight, 1.5 parts by weight to 5.9 parts by weight, or 1.5 parts by weight to 5.8 parts by weight based on 100 parts by weight of a total weight of the cathode additive.

In addition, the carbon coating layer and the carbon nanotube-containing layer may be included at a weight ratio of 1:4 to 1:50, 1:8 to 1:50, 1:8 to 1:30, 1:10 to 1:30, or 1:10 to 1:20.

As the total content of the carbon coating layer and the carbon nanotube-containing layer and their weight ratio are controlled within the above range, characteristics such as irreversible capacity of the lithium transition metal oxide particles are not impaired by the carbon coating layer, and a high proportion of carbon nanotubes are uniformly bonded on the carbon coating layer, thereby further improving electrical conductivity, irreversible capacity and capacity characteristics during charging and discharging.

In a specific embodiment, the carbon coating layer may be included in an amount of 0.05 parts by weight to 2.0 parts by weight, 0.06 parts by weight to 2.0 parts by weight, or 0.06 parts by weight to 1.9 parts by weight based on 100 parts by weight of a total weight of the cathode additive. The carbon nanotube-containing layer may be included in an amount of 0.4 parts by weight to 4.0 parts by weight, 0.8 parts by weight to 4.0 parts by weight, 0.8 parts by weight to 3.95 parts by weight, 1.0 parts by weight to 3.95 parts by weight, or 1.0 parts by weight to 3.90 parts by weight based on 100 parts by weight of a total weight of the cathode additive.

Each content or total content of the carbon coating layer and the carbon nanotube-containing layer may be measured and calculated by analyzing the carbon content of the surface of the cathode additive through a well-known elemental analysis, or by using the content of the water-soluble polymer dispersant and carbon nanotubes used as raw materials.

In the cathode additive, the carbon coating layer may have a thickness of 10 nm to 300 nm. In addition, the carbon nanotubes of the carbon nanotube-containing layer may be physically and uniformly adsorbed or chemically bonded on the carbon coating layer. Due to the thickness of the carbon coating layer and the bonding shape of the carbon nanotubes, the cathode additive of one embodiment may exhibit optimized irreversible capacity and capacity characteristics during charging and discharging.

The thickness of the carbon coating layer can be calculated based on the BET specific surface area of the cathode additive and the analysis result of the carbon content, or measured by analyzing the cathode additive with a transmission electron microscope (TEM) or a scanning transmission electron microscope (STEM).

The cathode additive described above may be mixed with a separate cathode active material to act as a sacrificial positive electrode material that compensates for the irreversible capacity of the anode during the initial charge and discharge of a lithium secondary battery, and then the cathode active material may act after such irreversible capacity compensation. In addition, since the cathode additive has improved capacity characteristics during charging and discharging, it can be preferably applied as an additional cathode active material.

According to another embodiment of the present disclosure, there is provided a manufacturing method of the cathode additive for a lithium secondary battery, including the steps of:
preparing a precursor mixture containing a lithium (Li) precursor and an iron (Fe) precursor;
calcining the precursor mixture under an inert gas atmosphere to obtain lithium-iron oxide particles doped or undoped with a hetero-element; and
heat-treating a mixture containing the lithium-iron oxide particles and a lithium borate-based compound under an inert gas or oxygen-containing gas atmosphere to obtain lithium-iron oxide particles coated with a lithium borate-based compound-containing layer.

A precursor mixture containing a lithium (Li) precursor and an iron (Fe) precursor is prepared. Preferably, the precursor mixture is prepared by solid-phase mixing a lithium precursor, an iron precursor, and, if necessary, a hetero-element precursor to meet LisFeO₄ or the stoichiometric ratio according to Chemical Formula 1.

As the lithium precursor, an oxide containing lithium such as Li₂O may be used without particular limitation.

As the iron precursor, one or more compounds selected from the group consisting of chlorides, nitric oxides, sulfur oxides, phosphates, oxides, halides, and hydrates of Fe(III) may be used.

An oxide or ammonium salt of the hetero-element may be used as the hetero-element precursor. As a non-limiting example, a compound such as Al₂O₃, NH₄F, TiO₂, MgO, ZnO, and Ga₂O₃ may be used as the hetero-element precursor.

A step of calcining the precursor mixture under an inert gas atmosphere to obtain lithium-iron oxide particles doped or undoped with a hetero-element is performed.

The above step may be performed under an inert atmosphere formed using an inert gas such as Ar, N₂, Ne, and He.

The calcination in the step of obtaining the lithium (Li)-iron (Fe) oxide particles may be performed at a temperature of 500 °C or higher, 500 °C to 1000 °C, or 550 °C to 800 °C. In order to generate crystal seeds at an appropriate rate, the calcination is preferably performed at a temperature of 500 °C or higher, or 550 °C or higher. However, when the heat-treatment temperature is excessively high, sintering in which grown crystal particles are aggregated may occur. Therefore, the calcination is preferably performed at a temperature of 1000 °C or lower, or 800 °C or lower. Specifically, the calcination is preferably performed at a temperature of 500 °C or higher, 550 °C or higher, or 600 °C or higher; and 1000 °C or less, 800 °C or less, or 700 °C or less. Preferably, the calcination is performed at a temperature of 550 °C to 1000 °C, 550 °C to 800 °C, 550 °C to 700 °C, or 600 °C to 700 °C.

The calcination may be performed for 2 to 12 hours at the above-described calcination temperature. The calcination time may be adjusted in consideration of the time required for stabilization of the crystal of lithium-iron oxide.

A step of heat-treating the mixture containing the lithium-iron oxide particles and the lithium borate-based compound under an inert gas or oxygen-containing gas atmosphere to obtain lithium-iron oxide particles coated with a lithium borate-based compound-containing layer is performed.

The above step may be performed under an inert atmosphere formed using an inert gas such as Ar, N₂, Ne, and He.

Alternatively, the above step may be performed under an oxygen-containing gas atmosphere such as air. The lithium-iron oxide such as LisFeO₄ reacts with carbon dioxide (CO₂) and moisture (H₂O) in air when exposed to air to change into Li₂CO₃ or LiOH. Therefore, it can be expected that it is not preferable to heat-treat the lithium-iron oxide particles in air, which is an oxygen-containing gas, in the above step. However, unlike the above expectation, when heat-treating the mixture of the lithium-iron oxide particles and the lithium borate-based compound under an oxygen-containing gas atmosphere at a temperature of 300 °C or higher, a lithium-iron oxide coated with a lithium borate-based compound-containing layer having excellent air stability can be obtained.

Mixing of the lithium-iron oxide particles and the lithium borate-based compound may be performed by solid-phase mixing using a conventional mixer.

The heat-treatment in the step of obtaining the lithium-iron oxide particles coated with a lithium borate-based compound-containing layer may be performed at a temperature of 300 °C or higher, 300 °C to 450 °C, 310 °C to 450 °C, or 310 °C to 400 °C for 1 hour to 10 hours.

Herein, the lithium borate-based compound is included in an amount of 2.0 parts by weight to 25.0 parts by weight, 2.0 parts by weight to 20.0 parts by weight, 2.5 parts by weight to 20.0 parts by weight, 2.5 parts by weight to 15.0 parts by weight, 2.5 parts by weight to 10.0 parts by weight, or 2.5 parts by weight to 5.0 parts by weight based on 100 parts by weight of the lithium-iron oxide particles.

An additive such as lithium hexafluorophosphate, lithium triflate, and lithium difluorophosphate may be further mixed with the lithium borate-based compound. In order to sufficiently achieve the effect of improving air stability by the introduction of the lithium borate-based compound-containing layer, the additive is preferably applied in an amount of 50 mol% or less, 30 mol% or less, or 10 mol% or less.

According to another embodiment of the present disclosure, there is provided a manufacturing method of the cathode additive for a lithium secondary battery, including the steps of:
mixing and heat-treating carbon nanotubes, a water-soluble polymer dispersant, and an iron (Fe) precursor to form an iron oxide-carbon precursor;
forming lithium-iron oxide particles by calcining a mixture containing a lithium precursor and the iron oxide-carbon precursor under an inert gas atmosphere; and
heat-treating a mixture containing the lithium-iron oxide particles and a lithium borate-based compound under an inert gas or oxygen-containing gas atmosphere to obtain lithium-iron oxide particles coated with a lithium borate-based compound-containing layer.

For example, the step of forming the iron oxide-carbon precursor may include the steps of: forming a carbon nanotube dispersion in which the carbon nanotubes are dispersed in an aqueous medium in the presence of the water-soluble polymer dispersant; mixing the carbon nanotube dispersion and an iron (Fe) precursor in the presence of a base; reacting the carbon nanotube dispersion and the iron (Fe) precursor in the mixture at a temperature of 50 °C to 100 °C; and filtering and drying the reaction product solution, followed by heat-treating at a temperature of 200 °C to 300 °C.

The iron oxide-carbon precursor is mixed with a lithium precursor and calcined at a high temperature to form lithium-iron oxide particles. At the same time, the water-soluble polymer dispersant is calcined on the surface of the lithium-iron oxide particles to form a uniform carbon coating layer. Carbon nanotubes may be bonded to the carbon coating layer. In addition, the lithium-iron oxide particles and the lithium borate-based compound are mixed and calcined under an inert gas or oxygen-containing gas atmosphere to obtain lithium-iron oxide particles coated with a lithium borate-based compound-containing layer.

As the water-soluble polymer dispersant, any water-soluble polymer may be used as long as it can uniformly disperse carbon nanotubes in an aqueous medium and form the carbon coating layer by calcination. Preferably, the water-soluble polymer dispersant may include at least one compound selected from the group consisting of polyvinylpyrrolidone-based polymers, polyacrylic acid-based polymers, polyvinyl alcohol-based polymers, and hydroxyalkyl cellulose-based polymers.

The water-soluble polymer dispersant and the carbon nanotubes may be dispersed and mixed in an aqueous medium by, for example, ultrasonic spraying to form a carbon nanotube dispersion. Then, the carbon nanotube dispersion is mixed with an iron precursor or an aqueous solution thereof, and may be mixed with a base such as ammonium hydroxide.

In order to form a carbon coating layer having an appropriate thickness and content, the water-soluble polymer dispersant may be used in an amount of 0.1 part by weight to 2 parts by weight, 0.5 part by weight to 2 parts by weight, or 0.5 parts by weight to 1.5 parts by weight based on a total amount of the iron oxide-carbon precursor. Further, in order to form an appropriate amount of the carbon nanotube-containing layer on the carbon coating layer, the carbon nanotubes may be used in an amount of 1 part by weight to 10 parts by weight, 2 parts by weight to 10 parts by weight, or 2 parts by weight to 7 parts by weight based on a total amount of the iron oxide-carbon precursor.

The iron (Fe) precursor may include one or more compounds selected from the group consisting of nitric oxides, sulfur oxides, phosphates, oxides, halides, and hydrates of Fe(III).

As described above, after mixing the carbon nanotube dispersion and the iron precursor, the carbon nanotube dispersion and the iron precursor are stirred, and a base such as ammonium hydroxide (NH₄OH) is added in an equivalent ratio of the iron precursor. Then, a reaction is performed at a temperature of 50 °C to 100 °C, or 70 °C to 90 °C for 1 hour to 10 hours, the reaction product solution is filtered and dried, and then additional heat-treatment is performed at a temperature of 200 °C to 300 °C, or 220 °C to 280 °C for 2 hours to 15 hours, or 6 hours to 12 hours to remove impurities. In this case, the drying step may be performed using a general oven or the like, and an iron oxide-carbon precursor may be formed through this process.

The iron oxide-carbon precursor may be mixed with a lithium precursor and then calcined at a temperature of 500 °C or more, 500 °C to 1000 °C, or 550 °C to 700 °C to form lithium-iron oxide. At this time, since the reaction between the iron oxide-carbon precursor and the lithium precursor may proceed in an equivalent reaction, for example, when the lithium precursor is a lithium oxide such as Li₂O, the iron oxide-carbon precursor and the lithium precursor are mixed at a molar ratio of 1:5, and high-temperature calcination may be performed.

As the lithium precursor, a lithium precursor well known in the art may be used in addition to the lithium oxide (Li₂O).

Meanwhile, regarding the matters of the step of obtaining lithium-iron oxide particles coated with a lithium borate-based compound-containing layer by heat-treating a mixture containing the lithium-iron oxide particles and a lithium borate-based compound under an inert gas or oxygen-containing gas atmosphere, refer to the above.

If necessary, a step of washing and drying the lithium-iron oxide particles coated with the lithium borate-based compound-containing layer may be performed.

As a non-limiting example, the washing process may be performed by mixing the lithium-iron oxide particles and a washing solution at a weight ratio of 1:2 to 1:10, followed by stirring. Distilled water, ammonia water, etc. may be used as the washing solution. The drying may be performed by heat-treatment at a temperature of 100 °C to 200 °C, or 100 °C to 180 °C for 1 hour to 10 hours.

According to another embodiment of the present disclosure, there is provided a cathode for a lithium secondary battery.

The cathode for a lithium secondary battery may include a cathode active material, a binder, a conductive material, and the cathode additive.

The cathode additive has a property of irreversibly releasing lithium during charging and discharging of the lithium secondary battery. Thus, the cathode additive is included in the cathode for a lithium secondary battery, and functions as a sacrificial positive electrode material for prelithiation.

Preferably, the cathode for a lithium secondary battery includes a cathode material containing a cathode active material, the cathode additive, and a binder; and a current collector for supporting the cathode material.

Herein, regarding the matters of the cathode additive, refer to the above.

In the case of a high-capacity battery, a proportion of the anode active material in the anode needs to be more increased in order to increase the battery capacity, and thus the amount of lithium consumed in an SEI layer is also increased. Thus, after calculating the amount of lithium consumed in the SEI layer of the anode, the amount of the sacrificial positive electrode material to be applied to the cathode may be inversely calculated to determine the design capacity of the battery.

According to one embodiment, the cathode additive may be included in an amount of more than 0 wt% and 15 wt% or less based on a total weight of the cathode material.

It is preferable that the content of the cathode additive is more than 0 wt% based on a total weight of the cathode material in order to compensate for irreversible lithium consumed in the formation of the SEI layer.

However, when an excessive amount of the cathode additive is included, the content of the cathode active material exhibiting a reversible charge/discharge capacity may be decreased to reduce the capacity of the battery, and residual lithium in the battery may be plated on the anode, thereby causing a short circuit of the battery or hindering safety. Thus, it is preferable that the content of the cathode additive is 15 wt% or less based on a total weight of the cathode material.

Specifically, the content of the cathode additive is more than 0 wt%, 0.5 wt% or more, 1 wt% or more, 2 wt% or more, or 3 wt% or more; and 15 wt% or less, 12 wt% or less, or 10 wt% or less based on a total weight of the cathode material.

Preferably, the content of the cathode additive may be 0.5 wt% to 15 wt%, 1 wt% to 15 wt%, 1 wt% to 12 wt%, 2 wt% to 12 wt%, 2 wt% to 10 wt%, or 3 wt% to 10 wt% based on a total weight of the cathode material.

As the cathode active material, any material capable of reversibly intercalating and deintercalating lithium ions may be used without particular limitation. For example, the cathode active material may be a composite oxide or a phosphorus oxide containing cobalt, manganese, nickel, iron, or a combination thereof and lithium.

As a non-limiting example, the cathode active material may be a compound represented by any one of the following formulae.

LiₐA_{1-b}R_{b}D₂ (0.90≤a≤1.8, 0≤b≤0.5); LiₐE_{1-b}R_{b}O_{2-c}D_{c} (0.90≤a≤1.8, 0≤b≤0.5, 0≤c≤0.05); LiE_{2-b}R_{b}O_{4-c}D_{c} (0≤b≤0.5, 0≤c≤0.05); LiₐNi_{1-b-c}Co_{b}R_{c}D_{d} (0.90≤a≤1.8, 0≤b≤0.5, 0≤c≤0.05, 0<d≤2); LiₐNi_{1-b-c}Co_{b}R_{c}O_{2-d}Z_{d} (0.90≤a≤1.8, 0≤b≤0.5, 0≤c≤0.05, 0<d<2); LiₐNi_{1-b-c}Co_{b}R_{c}O_{2-d}Z₂ (0.90≤a≤1.8, 0≤b≤0.5, 0≤c≤0.05, 0<d<2); LiₐNi_{1-b-c}Mn_{b}R_{c}D_{d} (0.90≤a≤1.8, 0≤b≤0.5, 0≤c≤0.05, 0<d≤2); LiₐNi_{1-b-c}Mn_{b}R_{c}O_{2-d}Z_{d} (0.90≤a≤1.8, 0≤b≤0.5, 0≤c≤0.05, 0<d<2); LiₐNi_{1-b-c}Mn_{b}R_{c}O_{2-d}Z₂ (0.90≤a≤1.8, 0≤b≤0.5, 0≤c≤0.05, 0<d<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}Mn_{d}GₐO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiTO₂; LiNiVO₄; Li_{(3-f)}J₂(PO₄)₃ (0≤f≤2); Li_{(3-f)}Fe₂(PO₄)₃ (0≤f≤2); and LiFePO₄.

In the above formulae, A is Ni, Co, Mn or a combination thereof; R is Al, Ni, Co, Mn, Cr, Fe, Mg, Sr, V, a rare earth element or a combination thereof; D is O, F, S, P or a combination thereof; E is Co, Mn or a combination thereof; Z is F, S, P or a combination thereof; G is Al, Cr, Mn, Fe, Mg, La, Ce, Sr, V or a combination thereof; Q is Ti, Mo, Mn or a combination thereof; T is Cr, V, Fe, Sc, Y or a combination thereof; and J is V, Cr, Mn, Co, Ni, Cu or a combination thereof.

Of course, one having a coating layer on the surface of the cathode active material may be used, or a cathode active material having a coating layer may be used together with the cathode active material. As the coating element included in the coating layer, Mg, Al, Co, K, Na, Ca, Si, Ti, V, Sn, Ge, Ga, B, As, Zr, or a mixture thereof may be used.

According to one embodiment, the cathode active material may be included in an amount of 80% to 95 wt% based on a total weight of the cathode material.

Specifically, the content of the cathode active material may be 80 wt% or more, 82 wt% or more, or 85 wt% or more; and 95 wt% or less, 93 wt% or less, or 90 wt% or less based on a total weight of the cathode material.

Preferably, the content of the cathode active material may be 82 wt% to 95 wt%, 82 wt% to 93 wt%, 85 wt% to 93 wt%, or 85 wt% to 90 wt% based on a total weight of the cathode material.

The conductive material is used to impart conductivity to the electrode.

A conductive material may be used without any particular limitation as long as it has electronic conductivity without causing a chemical change in the battery. As a non-limiting example, the conductive material may include a carbon-based material such as carbon black, acetylene black, ketjen black, channel black, furnace black, lamp black, thermal black, carbon fiber, etc.; graphite such as natural graphite, artificial graphite, etc.; metal powders or metal fibers such as copper, nickel, aluminum, silver, etc.; conductive whiskeys such as zinc oxide, potassium titanate, etc.; conductive metal oxides such as titanium oxide, etc.; a conductive polymer such as a polyphenylene derivative, etc.; or the like. As the conductive material, one or a mixture of two or more of the above-described examples may be used.

The content of the conductive material may be adjusted in a range that does not cause a decrease in the capacity of the battery while expressing an appropriate level of conductivity. Preferably, the content of the conductive material may be 1 wt% to 10 wt%, or 1 wt% to 5 wt% based on a total weight of the cathode material.

The binder is used to attach the cathode material well to the current collector.

As a non-limiting example, the binder may be polyvinyl alcohol, carboxymethylcellulose, hydroxypropylcellulose, diacetylcellulose, polyvinylchloride, carboxylated polyvinylchloride, polyvinylfluoride, a polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, or the like. As the binder, one or a mixture of two or more of the above examples may be used.

The content of the binder may be adjusted in a range that does not cause a decrease in the capacity of the battery while expressing an appropriate level of adhesiveness. Preferably, the content of the binder may be 1 wt% to 10 wt%, or 1 wt% to 5 wt% based on a total weight of the cathode material.

As the current collector, a material known to be applicable to the cathode of a lithium secondary battery in the art to which the present invention pertains may be used without particular limitation.

As a non-limiting example, the current collector used herein may include stainless steel; aluminum; nickel; titanium; calcined carbon; aluminum or stainless steel surface treated with carbon, nickel, titanium, silver, etc.; or the like.

Preferably, the current collector may have a thickness of 3 *µ*m to 500 *µ*m. In order to increase adhesion of the cathode material, the current collector may have fine unevenness formed on a surface thereof. The current collector may have various forms such as film, sheet, foil, net, a porous body, a foam body, a nonwoven body, etc.

The cathode for the lithium secondary battery may be formed by stacking a cathode material containing the cathode active material, the conductive material, the cathode additive, and the binder on the current collector.

According to another embodiment of the present disclosure, there is provided a lithium secondary battery including the cathode for a lithium secondary battery; an anode; a separator; and an electrolyte.

The lithium secondary battery includes a cathode containing the cathode additive. Accordingly, the lithium secondary battery can suppress gas generation in the cathode during charging and discharging, and can exhibit improved safety and lifespan characteristics. In addition, the lithium secondary battery may exhibit high discharge capacity, excellent output characteristics, and capacity retention.

Therefore, the lithium secondary battery may be used as a source of energy supply with improved performance and safety in the field of portable electronic devices such as mobile phones, laptop computers, tablet computers, mobile batteries, and digital cameras; and transportation means such as electric vehicles, electric motorcycles, and personal mobility devices.

The lithium secondary battery may include an electrode assembly wound with a separator interposed between the cathode and the anode, and a case in which the electrode assembly is embedded. In addition, the cathode, the anode, and the separator may be impregnated with an electrolyte.

The lithium secondary battery may have various shapes such as a prismatic shape, a cylindrical shape, a pouch shape, etc.

Regarding the matters of the cathode, refer to the description presented in the cathode for a lithium secondary battery.

The anode may include an anode material containing an anode active material, a conductive material, and a binder; and a current collector for supporting the anode material.

The anode active material may include a material capable of reversibly intercalating and deintercalating lithium ions, lithium metal, an alloy of lithium metal, a material capable of doping to and dedoping from lithium, and a transition metal oxide.

An example of the material capable of reversibly intercalating and deintercalating lithium ions may include crystalline carbon, amorphous carbon, or a mixture thereof as a carbonaceous material. Specifically, the carbonaceous material may be natural graphite, artificial graphite, Kish graphite, pyrolytic carbon, mesophase pitches, mesophase pitch-based carbon fiber, meso-carbon microbeads, petroleum or coal tar pitch derived cokes, soft carbon, hard carbon, etc.

The alloy of lithium metal may be an alloy of lithium and a metal selected from the group consisting of Na, K, Rb, Cs, Fr, Be, Mg, Ca, Sr, Si, Sb, Pb, In, Zn, Ba, Ra, Ge, Al, Sn, Bi, Ga, and Cd.

The material which may be doped to and dedoped from lithium may be Si, Si-C composite, SiOx (0<x<2), Si-Q alloy (wherein the Q is an element selected from the group consisting of an alkali metal, an alkaline earth metal, a group 13 element, a group 14 element, a group 15 element, a group 16 element, a transition metal, a rare earth element, and a combination thereof; but except for Si), Sn, SnO₂, a Sn-R alloy (wherein the R is an element selected from the group consisting of an alkali metal, an alkaline earth metal, a group 13 element, a group 14 element, a group 15 element, a group 16 element, a transition metal, a rare earth element, and a combination thereof; but except for Sn.), etc. In addition, the material, which may be doped to and dedoped from lithium, used herein may include a mixture of SiO₂ and at least one of the above examples. The Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, etc.

In addition, the transition metal oxide may be vanadium oxide, lithium vanadium oxide, lithium titanium oxide, etc.

Preferably, the anode may include at least one anode active material selected from the group consisting of a carbonaceous material and a silicon-based materials.

That is, according to another embodiment of the present disclosure, there is provided a lithium secondary battery including the cathode for a lithium secondary battery; an anode containing at least one anode active material selected from the group consisting of carbonaceous materials and silicon-based materials; a separator; and an electrolyte.

Herein, the carbonaceous material is at least one material selected from the group consisting of natural graphite, artificial graphite, Kish graphite, pyrolytic carbon, mesophase pitches, mesophase pitch-based carbon fiber, meso-carbon microbeads, petroleum or coal tar pitch derived cokes, soft carbon, and hard carbon. In addition, the silicon-based material may be a material containing Si, i.e., Si, Si-C composite, SiOx (0<x<2), Si-Q alloy, a mixture thereof, or a mixture of at least one of these and SiO₂.

According to one embodiment, the anode active material may be included in an amount of 85 wt% to 98 wt% based on a total weight of the anode material.

Specifically, the content of the anode active material may be 85 wt% or more, 87 wt% or more, or 90 wt% or more; and 98 wt% or less, 97 wt% or less, or 95 wt% or less based on a total weight of the anode material.

Preferably, the content of the anode active material may be 85 wt% to 97 wt%, 87 wt% to 97 wt%, 87 wt% to 95 wt%, or 90 wt% to 95 wt% based on a total weight of the anode material.

Regarding the matters of the conductive material and the binder included in the anode material, and the current collector, refer to the description presented in the cathode for a lithium secondary battery.

The separator separates the cathode and the anode, and provides a passage for lithium ions to move. As the separator, a separator known to be applicable to the lithium secondary battery in the art to which the present invention pertains may be used without any particular limitation. It is preferable that the separator has excellent wettability to the electrolyte while having low resistance to ionic migration of the electrolyte.

Specifically, the separator may be a porous polymer film made of a polyolefin-based polymer such as polyethylene, polypropylene, ethylene-butene copolymer, ethylene-hexene copolymer, ethylene-methacrylate copolymer, etc. The separator may be a multilayer film in which the porous polymer films are laminated in two or more layers. The separator may be a nonwoven fabric including glass fibers, polyethylene terephthalate fibers, etc. In addition, the separator may be coated with a ceramic component or a polymer material in order to secure heat resistance or mechanical strength.

As the electrolyte, an electrolyte known to be applicable to the lithium secondary battery in the art to which the present invention pertains may be used without any particular limitation. For example, the electrolyte may be an organic liquid electrolyte, an inorganic liquid electrolyte, a solid polymer electrolyte, a gel-type polymer electrolyte, a solid inorganic electrolyte, a molten inorganic electrolyte, etc.

Specifically, the electrolyte may include a non-aqueous organic solvent and a lithium salt.

The non-aqueous organic solvent may be used without any particular limitation as long as it may serve as a medium through which ions involved in an electrochemical reaction of the battery may move.

Specifically, the non-aqueous organic solvent may include ester-based solvents such as methyl acetate, ethyl acetate, γ-butyroiactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), ethyl methyl carbonate (EMC), ethylene carbonate (EC), and propylene carbonate (PC); alcohol-based solvents such as ethyl alcohol and isopropyl alcohol; nitriles such as R-CN (R is a C2 to C20 linear, branched or cyclic hydrocarbon group, which may include a double bond, an aromatic ring or an ether bond); amides such as dimethylformamide; dioxolanes such as 1,3-dioxolane; sulfolane; and the like.

Among the above examples, a carbonate-based solvent may be preferably used as the non-aqueous organic solvent.

In particular, in consideration of the battery charge/discharge performance and compatibility with the sacrificial positive electrode material, the non-aqueous organic solvent used herein may preferably be a mixture of cyclic carbonates (for example, ethylene carbonate and propylene carbonate) having high ionic conductivity and high dielectric constant and linear carbonates (for example, ethyl methyl carbonate, dimethyl carbonate and diethyl carbonate) having low viscosity. When the cyclic carbonate and the linear carbonate are mixed at a volume ratio of 1:1 to 1:9 and used, it may be advantageous for expressing the performance described above.

In addition, the non-aqueous organic solvent used herein may preferably include a mixture of ethylene carbonate (EC) and ethyl methyl carbonate (EMC) at a volume ratio of 1:2 to 1:10; or a mixture of ethylene carbonate (EC), ethyl methyl carbonate (EMC) and dimethyl carbonate (DMC) at a volume ratio of 1-3- 1-9- 1.

The lithium salt included in the electrolyte may be dissolved in the non-aqueous organic solvent so as to act as a source of supplying lithium ions in the battery, thereby enabling the lithium secondary battery to basically operate and playing a role to promote the movement of lithium ions between the cathode and the anode.

Specifically, the lithium salt may include LiPF₆, LiCl₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiN(SO₂F)₂ (LiFSI, lithium bis(fluorosulfonyl)imide), LiCI, Lil, LiB(C₂O4)₂, and the like. Preferably, the lithium salt may be LiPF₆, LiFSI, or a mixture thereof.

The lithium salt may be included in the electrolyte at a concentration of 0.1 M to 2.0 M. The lithium salt included within the concentration range may impart appropriate conductivity and viscosity to the electrolyte, thereby enabling excellent electrolyte performance.

Optionally, the electrolyte may include additives for the purpose of improving battery lifespan, suppressing reduction in battery capacity, and improving a battery discharge capacity.

For example, the additive may include haloalkylene carbonate-based compounds such as difluoroethylene carbonate, pyridine, triethyl phosphite, triethanolamine, cyclic ether, ethylene diamine, n-glyme, hexamethylphosphoric triamide, nitrobenzene derivatives, sulfur, quinoneimine dye, N-substituted oxazolidinone, N,N-substituted imidazolidine, ethylene glycol dialkyl ether, ammonium salt, pyrrole, 2-methoxy ethanol, aluminum trichloride, etc. The additive may be included in an amount of 0.1 wt% to 5 wt% based on a total weight of the electrolyte.

### [ADVANTAGEOUS EFFECTS]

The cathode additive for a lithium secondary battery according to the present disclosure has excellent air stability while exhibiting high initial irreversible capacity. The cathode additive can compensate for the loss of irreversible capacity of the high-capacity lithium secondary battery, while effectively suppressing gas generation of the battery or fire and explosion caused thereby.

### [BRIEF DESCRIPTION OF THE DRAWINGS]

FIGS. 1 and 2 are schematic diagrams showing a simplified cross section of cathode additive particles for a lithium secondary battery according to an embodiment of the present invention.
FIGS. 3 and 4 are scanning electron microscope (SEM) images of cathode additives prepared in Example 1 and Comparative Example 3.
FIGS. 5 to 11 are X-ray diffraction (XRD) analysis results of cathode additives prepared in Examples 1 to 2 and Comparative Examples 1 to 5.

### <DESCRIPTION OF SYMBOLS>

10: Lithium transition metal oxide particles
20: Lithium difluoro(oxalato)borate-containing layer
13: Carbon coating layer
17: Carbon nanotube-containing layer

### [DETAILED DESCRIPTION OF THE EMBODIMENTS]

Hereinafter, the function and effect of the present invention will be described in more detail through specific examples. However, these examples are provided for illustrative purposes only. The scope of the invention is not intended to be limited by these examples, and it is apparent to those skilled in the art that various changes and modifications can be made within the scope and spirit of the present invention.

### Example 1

### (1) Preparation of lithium-iron oxide particles

: Li₂O (manufactured by Ganfeng Lithium) and Fe₂O₃ (manufactured by Sigma-Aldrich) were mixed in a solid phase (molar ratio Li₂O:Fe₂O₃ = 5:1). The mixture was prepared in the form of pellets using a press, and calcined at 750 °C (heating for 6 hours - maintaining for 12 hours) under an Ar atmosphere to obtain lithium transition metal oxide particles (Li₅FeO₄).

### (2) Preparation of cathode additive

: 4.0 parts by weight of lithium tetrafluoroborate (LiBF₄, manufactured by TCI) was mixed with 100 parts by weight of the lithium transition metal oxide particles (Li₅FeO₄) in a solid phase using a mixer. The mixture was heat-treated under an Ar atmosphere at a temperature of 310 °C for 1 hour in a heat-treatment furnace to obtain lithium transition metal oxide particles coated with a LiBF₄-containing layer.

### (3) Manufacture of lithium secondary battery

: The lithium transition metal oxide coated with the LiBF₄-containing layer, carbon black as a conductive material, and polyvinylidene fluoride (PVdF) as a binder were mixed at a weight ratio of 95:3:2 in an organic solvent (N-methylpyrrolidone) to prepare a cathode material slurry. The cathode material slurry was coated on one side of a current collector, which is an aluminum foil having a thickness of 15 µm, and was rolled and dried to prepare a cathode (cutting size: Φ 14 mm).

A lithium secondary battery in the form of a coin cell was manufactured by preparing the cathode, an anode, a separator, and an electrolyte solution. At this time, 300 *µ*m thick Li-metal (cutting size: Φ 15 mm) was used as the anode. The electrolyte solution was prepared by dissolving 1.0 M of LiPF₆ and 2 wt% of vinylene carbonate (VC) in a non-aqueous organic solvent in which ethylene carbonate (EC), dimethyl carbonate (DMC) and diethyl carbonate (DEC) were mixed in a volume ratio of 1: 2: 1. And, as the separator, a PE resin separator (manufactured by W-scope, WL20C, 20 *µ*m) was used.

### Example 2

### (1) Preparation of lithium-iron oxide particles

: In the preparation of the lithium-iron oxide particles according to Example 1, Al₂O₃, a hetero-element precursor, was further added to obtain lithium transition metal oxide particles having a composition of Li₅Fe_{0.8}Al_{0.2}O₄.

### (2) Preparation of cathode additive

: Lithium transition metal oxide particles coated with a LiBF₄-containing layer were obtained in the same manner as in Example 1, except that Li₅Fe_{0.8}Al_{0.2}O₄ was used instead of LisFeO₄ as the lithium transition metal oxide.

### (3) Manufacture of lithium secondary battery

: A lithium secondary battery was manufactured in the same manner as in Example 1, except that the lithium transition metal oxide coated with the LiBF₄-containing layer was used.

### Example 3

### (1) Preparation of lithium-iron oxide particles

: In the preparation of the lithium-iron oxide particles according to Example 1, Al₂O₃, a hetero-element precursor, was further added to obtain lithium transition metal oxide particles having a composition of Li₅Fe_{0.8}Al_{0.2}O₄.

### (2) Preparation of cathode additive

: Lithium transition metal oxide particles coated with a LiBF₄-containing layer were obtained in the same manner as in Example 1, except that heat-treatment on a mixture of lithium transition metal oxide particles (Li₅Fe_{0.8}Al_{0.2}O₄) and lithium tetrafluoroborate (LiBF₄) was performed under an air atmosphere instead of Ar.

### (3) Manufacture of lithium secondary battery

: A lithium secondary battery was manufactured in the same manner as in Example 1, except that the lithium transition metal oxide coated with the LiBF₄-containing layer was used.

### Example 4

### (1) Preparation of lithium-iron oxide particles

: In the preparation of the lithium-iron oxide particles according to Example 1, Al₂O₃, a hetero-element precursor, was further added to obtain lithium transition metal oxide particles having a composition of Li₅Fe_{0.75}Al_{0.25}O₄.

### (2) Preparation of cathode additive

: Lithium transition metal oxide particles coated with a LiBF₄-containing layer were obtained in the same manner as in Example 1, except that Li₅Fe_{0.75}Al_{0.25}O₄ was used instead of LisFeO₄ as the lithium transition metal oxide.

### (3) Manufacture of lithium secondary battery

: A lithium secondary battery was manufactured in the same manner as in Example 1, except that the lithium transition metal oxide coated with the LiBF₄-containing layer was used.

### Example 5

### (1) Preparation of lithium-iron oxide particles

: In the preparation of the lithium-iron oxide particles according to Example 1, Al₂O₃, a hetero-element precursor, was further added to obtain lithium transition metal oxide particles having a composition of Li₅Fe_{0.75}Al_{0.25}O₄.

### (2) Preparation of cathode additive

: 3.0 parts by weight of lithium tetrafluoroborate (LiBF₄, manufactured by TCI) was mixed with 100 parts by weight of the lithium transition metal oxide particles (Li₅Fe_{0.75}Al_{0.25}O₄) in a solid phase using a mixer. The mixture was heat-treated under an Ar atmosphere at a temperature of 310 °C for 1 hour in a heat-treatment furnace to obtain lithium transition metal oxide particles coated with a LiBF₄-containing layer.

### (3) Manufacture of lithium secondary battery

: A lithium secondary battery was manufactured in the same manner as in Example 1, except that the lithium transition metal oxide coated with the LiBF₄-containing layer was used.

### Example 6

### (1) Preparation of lithium-iron oxide particles

: In the preparation of the lithium-iron oxide particles according to Example 1, Al₂O₃, a hetero-element precursor, was further added to obtain lithium transition metal oxide particles having a composition of Li₅Fe_{0.75}Al_{0.25}O₄.

### (2) Preparation of cathode additive

: 2.5 parts by weight of lithium tetrafluoroborate (LiBF₄, manufactured by TCI) was mixed with 100 parts by weight of the lithium transition metal oxide particles (Li₅Fe_{0.75}Al_{0.25}O₄) in a solid phase using a mixer. The mixture was heat-treated under an Ar atmosphere at a temperature of 310 °C for 1 hour in a heat-treatment furnace to obtain lithium transition metal oxide particles coated with a LiBF₄-containing layer.

### (3) Manufacture of lithium secondary battery

: A lithium secondary battery was manufactured in the same manner as in Example 1, except that the lithium transition metal oxide coated with the LiBF₄-containing layer was used.

### Example 7

### (1) Preparation of lithium-iron oxide particles

: In the preparation of the lithium-iron oxide particles according to Example 1, Al₂O₃ and TiO₂, a hetero-element precursor, were further added to obtain lithium transition metal oxide particles having a composition of Li₅Fe_{0.77}Al_{0.2}Ti_{0.03}O₄.

### (2) Preparation of cathode additive

: Lithium transition metal oxide particles coated with a LiBF₄-containing layer were obtained in the same manner as in Example 1, except that Li₅Fe_{0.77}Al_{0.2}Ti_{0.03}O₄ was used instead of LisFeO₄ as the lithium transition metal oxide.

### (3) Manufacture of lithium secondary battery

: A lithium secondary battery was manufactured in the same manner as in Example 1, except that the lithium transition metal oxide coated with the LiBF₄-containing layer was used.

### Example 8

### (1) Preparation of cathode additive

A 0.2 L reactor and a mechanical stirrer were used, and the cathode additive was prepared according to the following method.

An aqueous dispersion of carbon nanotubes manufactured by LG Chem was used. The aqueous dispersion was prepared by mixing 5.83 wt % of carbon nanotubes (CNT) and 1.0 wt% of polyvinylpyrrolidone (manufactured by Acros organics, Mw 50,000 g/mol), which is a water-soluble polymer dispersant, in 200 ml of DI water using an ultrasonic tip for 10 minutes.

0.6 mol of iron(III) nitrate nonahydrate (manufactured by Daejung Chemical, 242.328 g) was dissolved in 600 ml of DI water, and slowly added to a flask containing 28 g of the CNT aqueous dispersion (CNT content compared to iron oxide-carbon precursor (Fe₂O₃-CNT precursor) to be formed in the subsequent process = 3.3 wt%), followed by stirring for 30 minutes. Subsequently, 1.8 mol (252.36 g) of NH₄OH was slowly poured into the flask, stirred for 30 minutes, and reacted at 80 °C for 6 hours.

After completion of the reaction, the mixture was allowed to stand for 30 minutes, the upper layer solution was discarded, and filtration was performed, followed by drying in a convection oven at 120 °C for 12 hours. The dried powder was heat-treated at 250 °C for 6 hours under an air atmosphere to remove impurities, and an iron oxide-carbon precursor (Fe₂O₃-CNT precursor) was obtained.

Li₂O (manufactured by Ganfeng Lithium) and the Fe₂O₃-CNT precursor were uniformly mixed at a molar ratio of 5:1, and calcined at 600 °C (heating for 2 hours, maintaining for 6 hours) under an Ar atmosphere in a heat-treatment furnace to obtain lithium-iron oxide.

6.0 parts by weight of lithium difluoro(oxalato)borate (manufactured by Sigma-Aldrich) was mixed with 100 parts by weight of the lithium-iron oxide using a mixer. The mixture was calcined at 350 °C (heating for 2 hours, maintaining for 6 hours) under an Ar atmosphere to obtain a cathode additive.

### (2) Manufacture of lithium secondary battery

The lithium transition metal oxide, carbon black as a conductive material, and polyvinylidene fluoride (PVdF) as a binder were mixed at a weight ratio of 90:4:6 in an organic solvent (N-methylpyrrolidone) to prepare a cathode material slurry. The cathode material slurry was coated on one side of a current collector, which is an aluminum foil having a thickness of 15 *µ*m, and was rolled and dried to prepare a cathode (cutting size: Φ 14 mm).

A lithium secondary battery in the form of a coin cell was prepared by preparing the cathode, an anode, a separator, and an electrolyte solution. At this time, 300 *µ*m thick Li-metal (cutting size: Φ 14 mm) was used as the anode. The electrolyte solution was prepared by dissolving 1.0 M of LiPF₆ and 2 wt% of vinylene carbonate (VC) in a non-aqueous organic solvent in which ethylene carbonate (EC), dimethyl carbonate (DMC) and diethyl carbonate (DEC) were mixed in a volume ratio of 1: 2: 1. And, as the separator, a PE resin separator (manufactured by W-scope, WL20C, 20 *µ*m) was used.

### Example 9

A cathode additive and a lithium secondary battery including the same were prepared in the same manner as in Example 8, except that the content of the lithium difluoro(oxalato)borate was increased to 9.0 parts by weight based on 100 parts by weight of the lithium-iron oxide.

### Example 10

A cathode additive and a lithium secondary battery including the same were prepared in the same manner as in Example 8, except that the content of the CNT aqueous dispersion was increased to 34 g (CNT content compared to Fe₂O₃-CNT precursor to be formed in the subsequent process = 4.0 wt%).

### Example 11

A cathode additive and a lithium secondary battery including the same were prepared in the same manner as in Example 8, except that the content of the CNT aqueous dispersion was increased to 48 g (CNT content compared to Fe₂O₃-CNT precursor to be formed in the subsequent process = 5.5 wt%).

### Example 12

A cathode additive and a lithium secondary battery including the same were prepared in the same manner as in Example 8, except that the content of the CNT aqueous dispersion was increased to 72 g (CNT content compared to Fe₂O₃-CNT precursor to be formed in the subsequent process = 8.1 wt%).

### Comparative Example 1

### (1) Preparation of lithium-iron oxide particles

: In the preparation of the lithium-iron oxide particles according to Example 1, Al₂O₃, a hetero-element precursor, was further added to obtain lithium transition metal oxide particles having a composition of Li₅Fe_{0.8}Al_{0.2}O₄.

### (2) Manufacture of lithium secondary battery

: A lithium secondary battery was manufactured in the same manner as in Example 1, except that the lithium transition metal oxide (Li₅Fe_{0.8}Al_{0.2}O₄) was used instead of the lithium transition metal oxide coated with the LiBF₄-containing layer.

### Comparative Example 2

### (1) Preparation of lithium-iron oxide particles

: In the preparation of the lithium-iron oxide particles according to Example 1, Al₂O₃, a hetero-element precursor, was further added to obtain lithium transition metal oxide particles having a composition of Li₅Fe_{0.75}Al_{0.25}O₄.

### (2) Manufacture of lithium secondary battery

: A lithium secondary battery was manufactured in the same manner as in Example 1, except that the lithium transition metal oxide (Li₅Fe_{0.75}Al_{0.25}O₄) was used instead of the lithium transition metal oxide coated with the LiBF₄-containing layer.

### Comparative Example 3

### (1) Preparation of lithium-iron oxide particles

: In the preparation of the lithium-iron oxide particles according to Example 1, Al₂O₃ and MgO, a hetero-element precursor, were further added to obtain lithium transition metal oxide particles having a composition of Li₅Fe_{0.65}Al_{0.25}Mg_{0.1}O₄.

### (2) Manufacture of lithium secondary battery

: A lithium secondary battery was manufactured in the same manner as in Example 1, except that the lithium transition metal oxide (Li₅Fe_{0.65}Al_{0.25}Mg_{0.1}O₄) was used instead of the lithium transition metal oxide coated with the LiBF₄-containing layer.

### Comparative Example 4

1.494 g of Li₂O (manufactured by Ganfeng Lithium) and 1.597 g of Fe₂O₃ (manufactured by Sigma-Aldrich) were mixed in a solid phase (molar ratio Li₂O:Fe₂O₃ = 5:1). The mixture was prepared in the form of pellets using a press, and calcined at a high temperature of 750 °C (heating for 6 hours - maintaining for 12 hours) under an Ar atmosphere to obtain a cathode additive. A lithium secondary battery was manufactured in the same manner as in Example 8, except that the cathode additive was used.

### Comparative Example 5

1.494 g of Li₂O (manufactured by Ganfeng Lithium) and 1.597 g of Fe₂O₃ (manufactured by Sigma-Aldrich) were mixed in a solid phase (molar ratio Li₂O:Fe₂O₃ = 5:1). 0.4 g (4 g of polyvinylpyrrolidone based on 0.1 mol of cathode additive (Li₅FeO₄) to be prepared) of polyvinylpyrrolidone (manufactured by Acros organics, Mw 50,000 g/mol) was added to the mixture, and mixed. The mixture was prepared in the form of pellets using a press, and calcined at a high temperature of 750 °C (heating for 6 hours - maintaining for 12 hours) under an Ar atmosphere to obtain a cathode additive. A lithium secondary battery was manufactured in the same manner as in Example 8, except that the cathode additive was used.

### Comparative Example 6

1.494 g of Li₂O (manufactured by Ganfeng Lithium) and 1.597 g of Fe₂O₃ (manufactured by Sigma-Aldrich) were mixed in a solid phase (molar ratio Li₂O:Fe₂O₃ = 5:1). 10 wt% of carbon nanotubes (CNT) were added to the mixture, and mixed. The mixture was prepared in the form of pellets using a press, and calcined at a high temperature of 750 °C (heating for 6 hours - maintaining for 12 hours) under an Ar atmosphere to obtain a cathode additive. A lithium secondary battery was manufactured in the same manner as in Example 8, except that the cathode additive was used.

### Comparative Example 7

A cathode additive and a lithium secondary battery including the same were prepared in the same manner as in Example 8, except that lithium hexafluorophosphate (LiPF₆, manufactured by Sigma-Aldrich) was used in the same content as the lithium difluoro(oxalato)borate instead of the lithium difluoro(oxalato)borate, and the calcination was performed at 250 °C.

### Comparative Example 8

A cathode additive and a lithium secondary battery including the same were prepared in the same manner as in Example 8, except that 2.0 parts by weight of lithium triflate (LiOTf, manufactured by Tokyo Chemical Industry Co.) was used based on 100 parts by weight of the lithium-iron oxide instead of the lithium difluoro(oxalato)borate.

### Comparative Example 9

### (1) Preparation of lithium-iron oxide particles

: In the same manner as in Example 8, Li₂O (manufactured by Ganfeng Lithium) and the Fe₂O₃-CNT precursor were uniformly mixed at a molar ratio of 5:1, and calcined at 600 °C (heating for 2 hours, maintaining for 6 hours) under an Ar atmosphere in a heat-treatment furnace to obtain lithium-iron oxide.

### (2) Manufacture of lithium secondary battery

A lithium secondary battery was manufactured in the same manner as in Example 8, except that the lithium-iron oxide, lithium difluoro(oxalato)borate (manufactured by Sigma-Aldrich), carbon black, and polyvinylidene fluoride were mixed at a weight ratio of 82:8:4:6 in an organic solvent (N-methylpyrrolidone) in the preparation of the cathode material slurry.

### Experimental Example 1

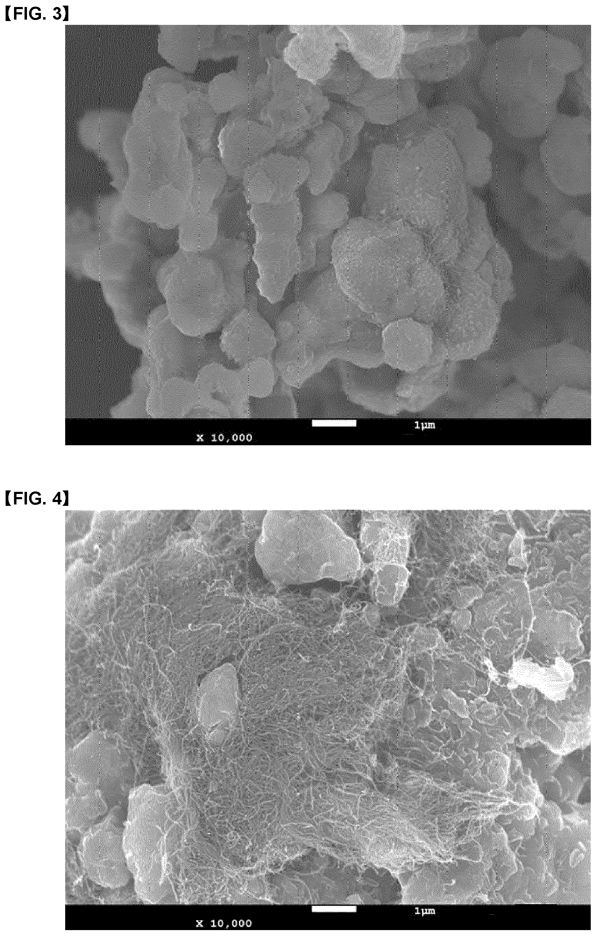

Scanning electron microscope (SEM) images of the cathode additives prepared in Example 8 and Comparative Example 6 are shown in FIG. 3 (Example 8) and FIG. 4 (Comparative Example 6).

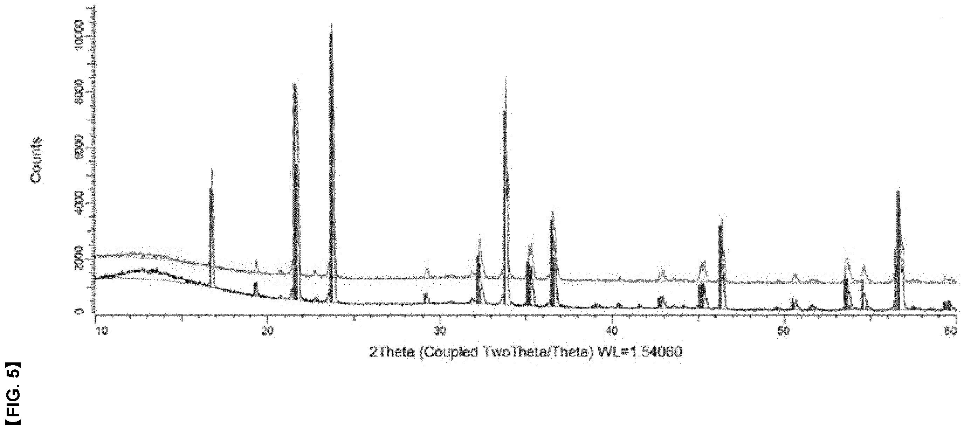

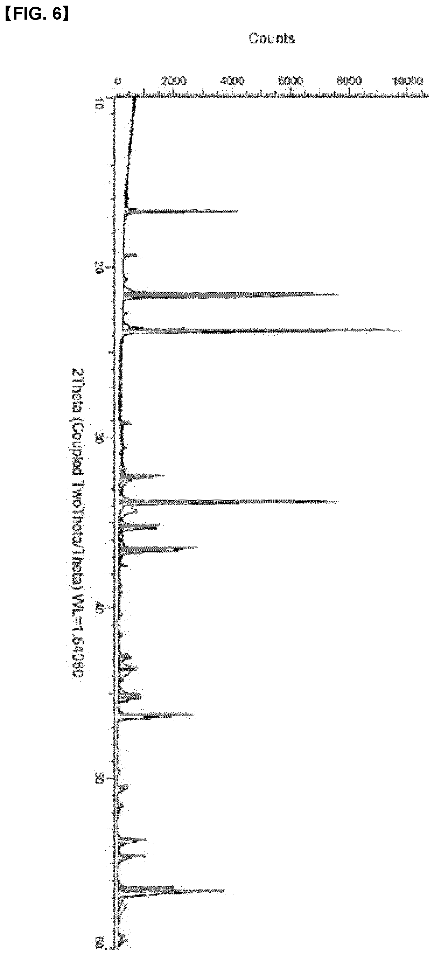

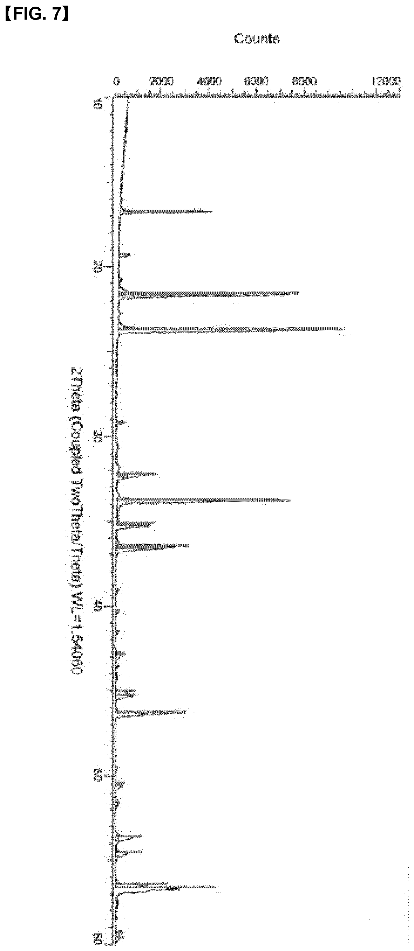

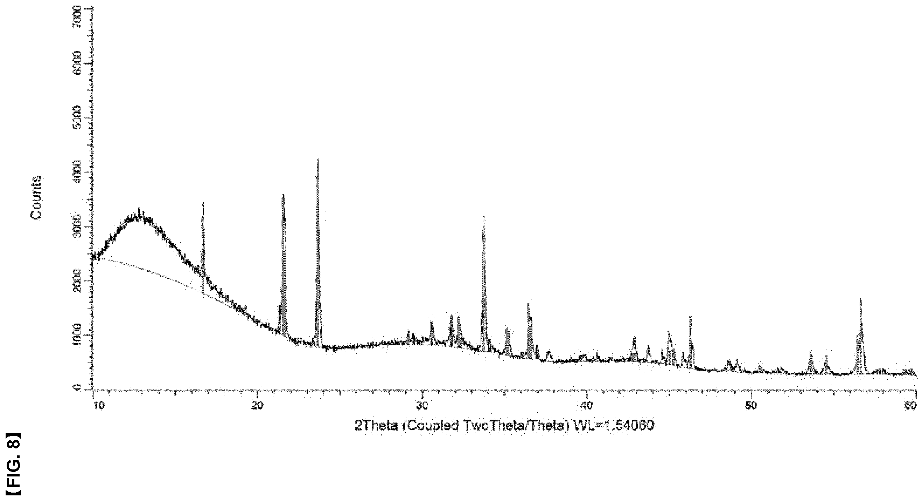

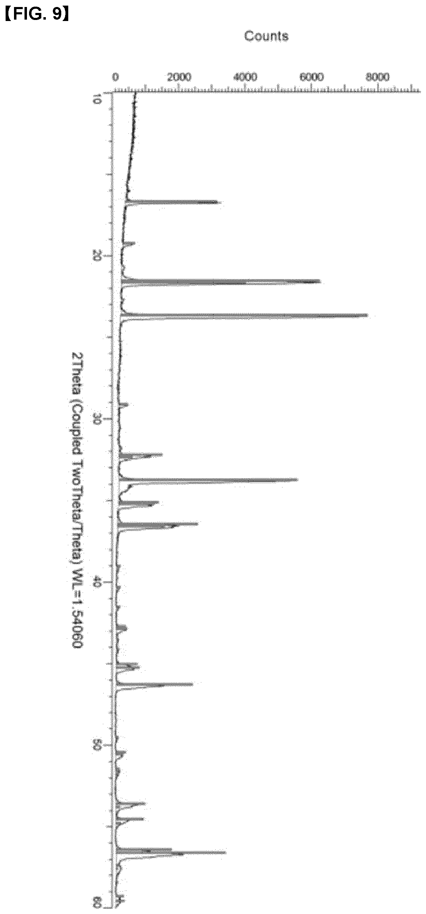

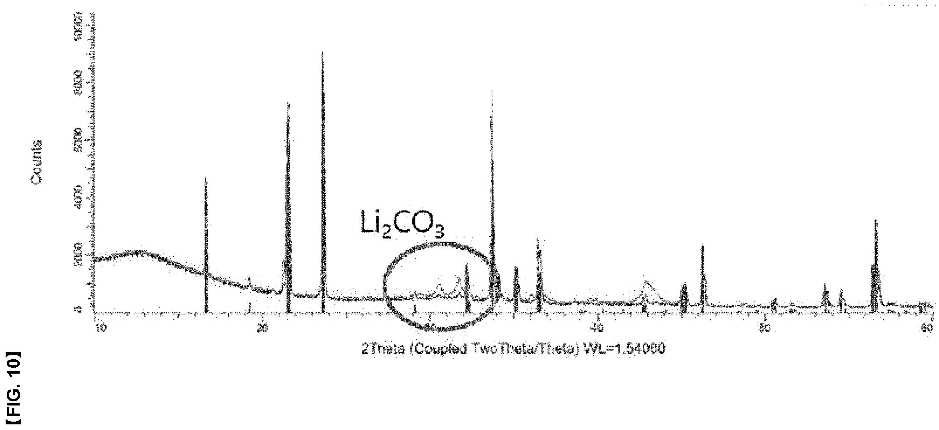

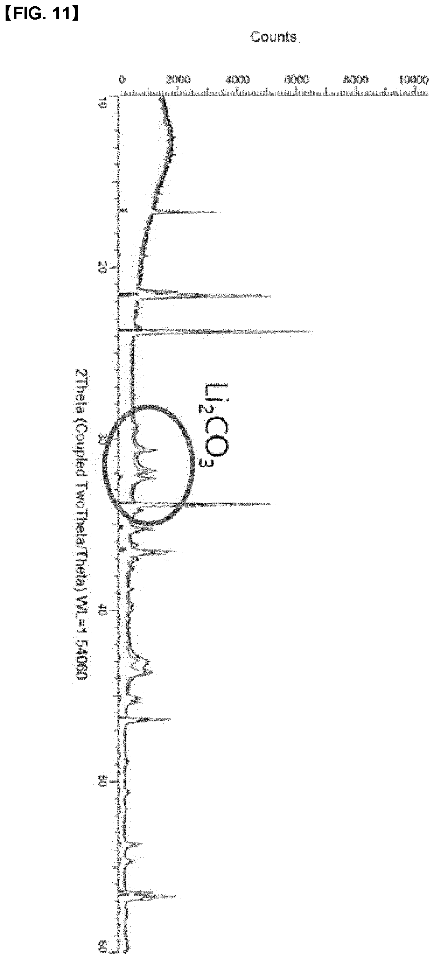

X-ray diffraction analysis (D8 Endeavor, Bruker) results of the cathode additives prepared in Examples 8 to 9 and Comparative Examples 4 to 8 are shown in FIG. 5 (Example 8), FIG. 6 (Example 9), FIG. 7 (Comparative Example 4), FIG. 8 (Comparative Example 5), FIG. 9 (Comparative Example 6), FIG. 10 (Comparative Example 7), and FIG. 11 (Comparative Example 8).

Referring to the analysis results of scanning transmission microscope and XRD, it was confirmed that lithium transition metal oxide of Li₅FeO₄ was formed in the cathode additives of Examples, and a double coating layer including a carbon coating layer derived from polyvinylpyrrolidone (PVP) and a carbon nanotube-containing layer was formed on the lithium transition metal oxide particles to a thickness of 10 to 300 nm. It was also confirmed that a lithium borate-based compound-containing layer was formed on the surface of the lithium transition metal oxide.

### Experimental Example 2

### (1) Irreversible capacity and charge/discharge capacity

A charge/discharge experiment was conducted by charging the lithium secondary batteries prepared in Examples and Comparative Examples up to 4.25 V under a constant current of 60 mA/g and a constant voltage of 30 mA/g at 45 °C, and discharging to 2.5 V under a constant current of 10 mA/g. Irreversible capacity, charge capacity, and discharge capacity were calculated through the charge/discharge experiment, respectively.

### (2) Charge capacity retention after aging

The lithium secondary batteries prepared in Examples and Comparative Examples were stored in an air atmosphere chamber maintained at a temperature of 30 °C and a relative humidity of 33% (33 RH%) for 18 hours. Thereafter, the charge/discharge experiment was performed on the lithium secondary batteries under the same conditions. A ratio (capacity retention, %) of charge capacity after storage in the chamber to charge capacity before storage in the chamber was calculated.

**[Table 1]**

| | Formation | | Charge capacity retention after aging (%) |
|---|---|---|---|
| | Charge capacity (mAh/g) | Discharge capacity (mAh/g) | |
| Example 1 | 700.20 | 52.90 | 96.0 |
| Example 2 | 612.30 | 16.00 | 98.9 |
| Example 3 | 657.82 | 34.96 | 95.5 |
| Example 4 | 559.81 | 25.16 | 100.3 |
| Example 5 | 585.89 | 10.19 | 95.2 |
| Example 6 | 633.17 | 13.83 | 94.6 |
| Example 7 | 556.81 | 22.15 | 98.6 |
| Example 8 | 666.33 | 77.71 | 63.6 |
| Example 9 | 480.78 | 35.35 | 76.3 |
| Comparative Example 1 | 758.70 | 12.50 | Not measurable |
| Comparative Example 2 | 756.05 | 11.46 | Not measurable |
| Comparative Example 3 | 501.50 | 3.82 | Not measurable |
| Comparative Example 4 | 265.46 | 25.748 | Not measurable |
| Comparative Example 5 | 21.97 | 3.64 | Not measurable |
| Comparative Example 6 | 595.63 | 38.55 | Not measurable |
| Comparative Example 7 | Not measurable | Not measurable | Not measurable |
| Comparative Example 8 | Not measurable | Not measurable | Not measurable |
| Comparative Example 9 | 594.34 | 50.76 | 50.9 |

Referring to Table 1, it was confirmed that the lithium secondary batteries of Examples had a high capacity retention of 60% or more after aging while exhibiting a sufficient irreversible capacity of 480 mAh/g or more, and maintained a color similar to that of the electrode film before aging to have excellent air stability.

In contrast, it was impossible to measure the capacity retention of the lithium secondary batteries of Comparative Examples, as the electrode film was distorted during the aging test. And, it was confirmed that the lithium secondary batteries of Comparative Examples had very poor air stability as the color of the electrode film changed significantly darker than the color of the electrode film before aging.

The lithium secondary batteries of Comparative Examples 7 and 8 were not subjected to electrochemical experiments due to severe changes over time.

As the lithium secondary battery of Comparative Example 9 included the lithium borate-based compound as an additive for the cathode material, it was confirmed that the initial charge capacity and the charge capacity retention after aging were significantly lower than those of Example 8.

In the above, although the present invention has been described with reference to limited embodiments and drawings, the present invention is not limited thereto, and various modifications and variations are possible within the technical idea of the present invention and within the equivalent scope of the claims to be described below by those skilled in the art to which the present invention pertains.

## Claims

1. A cathode additive for a lithium secondary battery comprising
lithium (Li)-iron (Fe) oxide particles doped or undoped with a hetero-element; and
a lithium borate-based compound-containing layer formed on the lithium-iron oxide particles.

2. The cathode additive for a lithium secondary battery of Claim 1,
wherein the lithium borate-based compound-containing layer is a coating layer made of a lithium borate-based compound.

3. The cathode additive for a lithium secondary battery of Claim 1,
wherein the lithium borate-based compound-containing layer is included in an amount of 2 parts by weight to 25 parts by weight based on 100 parts by weight of a total weight of the cathode additive.

4. The cathode additive for a lithium secondary battery of Claim 1,
wherein the lithium borate-based compound is at least one compound selected from the group consisting of lithium bis(oxalato)borate, lithium difluoro(oxalato)borate, lithium tetrafluoroborate, lithium bis(2-methyl-2-fluoromalonato)borate, and lithium malonate difluoro borate.

5. The cathode additive for a lithium secondary battery of Claim 1,
wherein the lithium-iron oxide is Li₅FeO₄ or a compound represented by the following Chemical Formula 1:
[Chemical Formula 1] Li₅Fe_{1-x-y}AlₓM_{y}O₄
in the Chemical Formula 1,
M is at least one element selected from the group consisting of at least one group 2 element selected from the group consisting of magnesium (Mg), calcium (Ca), strontium (Sr), and barium (Ba); at least one group 17 element selected from the group consisting of fluorine (F), chlorine (CI), bromine (Br), and iodine (I); at least one period 4 transition metal selected from the group consisting of scandium (Sc), titanium (Ti), vanadium (V), chromium (Cr), manganese (Mn), cobalt (Co), copper (Cu), and zinc (Zn); and at least one group 13 element selected from the group consisting of gallium (Ga) and indium (In),
x is 0.1 to 0.35, and
y is 0 to 0.1.

6. The cathode additive for a lithium secondary battery of Claim 1,
wherein the lithium-iron oxide particles have a volume average particle diameter (D50) of 0.5 *µ*m to 45 *µ*m.

7. The cathode additive for a lithium secondary battery of Claim 1,
including the lithium-iron oxide particles;
a carbon coating layer formed on the lithium-iron oxide particles; and
a lithium borate-based compound-containing layer formed on the carbon coating layer.

8. The cathode additive for a lithium secondary battery of Claim 7,
wherein the carbon coating layer is included in an amount of 0.05 parts by weight to 2.0 parts by weight based on 100 parts by weight of a total weight of the cathode additive.

9. The cathode additive for a lithium secondary battery of Claim 1,
including the lithium-iron oxide particles;
a carbon coating layer formed on the lithium-iron oxide particles;
a carbon nanotube-containing layer formed on the carbon coating layer; and
a lithium borate-based compound-containing layer formed on the carbon nanotube-containing layer.

10. The cathode additive for a lithium secondary battery of Claim 9,
wherein the carbon nanotube-containing layer is included in an amount of 0.4 parts by weight to 4.0 parts by weight based on 100 parts by weight of a total weight of the cathode additive.

11. The cathode additive for a lithium secondary battery of Claim 9,
wherein the carbon coating layer and the carbon nanotube-containing layer is included at a weight ratio of 1:4 to 1:50.

12. A manufacturing method of the cathode additive for a lithium secondary battery of Claim 1, comprising the steps of:
preparing a precursor mixture containing a lithium (Li) precursor and an iron (Fe) precursor;
calcining the precursor mixture under an inert gas atmosphere to obtain lithium-iron oxide particles doped or undoped with a hetero-element; and
heat-treating a mixture containing the lithium-iron oxide particles and a lithium borate-based compound under an inert gas or oxygen-containing gas atmosphere to obtain lithium-iron oxide particles coated with a lithium borate-based compound-containing layer.

13. The manufacturing method of the cathode additive for a lithium secondary battery of Claim 12,
wherein the calcination in the step of obtaining the lithium-iron oxide particles is performed at a temperature of 500 °C or higher, and
the heat-treatment in the step of obtaining the lithium-iron oxide particles coated with a lithium borate-based compound-containing layer is performed at a temperature of 300 °C or higher.

14. A cathode for a lithium secondary battery comprising a cathode active material, a binder, a conductive material, and the cathode additive of Claim 1.

15. A lithium secondary battery comprising the cathode for a lithium secondary battery of Claim 14; an anode; a separator; and an electrolyte.

16. A lithium secondary battery comprising the cathode for a lithium secondary battery of Claim 14; an anode containing at least one anode active material selected from the group consisting of carbonaceous materials and silicon-based materials; a separator; and an electrolyte.
